# EUROPÄISCHE PATENTSCHRIFT

(11) **EP 2 653 737 B1**
(45) Veröffentlichungstag und Bekanntmachung des Hinweises auf die Patenterteilung: **30.08.2023**
(21) Anmeldenummer: 13164335.5
(22) Anmeldetag: 18.04.2013
(51) Int. Cl.: F16C 29/06, F16C 33/58

(54) **Laufbahn mit definierten Kontaktbereichen**
Bearing race with defined contact areas
Chemin de roulement dotée de zones de contact définies

(30) Priorität: 18.04.2012 DE 102012206373; 18.04.2012 DE 202012101437 U
(43) Veröffentlichungstag der Anmeldung: 23.10.2013
(73) Patentinhaber: Ewellix AB, 433 21 Partille, Göteborg (SE)
(72) Erfinder: Jeschka, Erwin, 97711 Maßbach (DE); Gransow, Anita, 97526 Sennfeld (DE); Mayer, Uwe, 97702 Münnerstadt (DE); Stahl, Erwin, 97714 Oerlenbach-Rottershausen (DE); Velde, Henryk, 97440 Werneck (DE)
(74) Vertreter: Heyerhoff Geiger & Partner Patentanwälte PartGmbB

(56) Entgegenhaltungen:
- EP-A1- 1 936 216
- EP-A2- 1 921 332
- DE-A1- 2 849 758
- DE-A1- 10 249 975
- DE-A1-102008 039 848
- GB-A- 2 104 162
- US-A- 4 952 075

## Beschreibung

Die vorliegende Erfindung betrifft eine Linearführung und eine Laufbahn von Kugelkanälen bei einer derartigen Linearführung sowie ein Herstellungsverfahren für eine Linearführung.

Unter einer Linearführung versteht man im Allgemeinen eine Anordnung, die eine möglichst reibungsfreie Translation einer oder mehrerer beweglicher Baugruppen einer Maschine ermöglicht und dabei gleichzeitig eine Einhaltung der Bewegungsrichtung in Form einer linearen Bahn garantiert. Man kann Linearführungen nach ihrer Lagerung grundsätzlich in Gleitführungen und Wälzführungen unterteilen. Wälzführungen beruhen auf dem Prinzip der Umwälzung von Wälzkörpern zwischen zwei relativ zueinander bewegten Führungselementen bzw. -teilen. Als Wälzkörper können, wie bei einem Rotationswälzlager, beispielsweise Kugeln, Rollen, Nadeln oder andere Wälzkörper dienen. Zu den Wälzführungen gehören beispielsweise Profilschienenführungen oder Linearkugellager, welche auch als Kugelbuchsen bezeichnet werden können. Hierbei sind Linearführungen nicht ausschließlich auf lineare Bewegungen beschränkt. Sie ermöglichen vielmehr eine translatorische Bewegung im Vergleich zu rotatorischen Bewegungen, die durch entsprechende Rotationswälzlager geführt werden. Gerade im Bereich der Linearlager werden die Begriffe "linear" und "translatorisch" daher häufig synonym verwendet.

Mit Hilfe von Linearführungen lassen sich präzise Translationsbewegungen in vielfältigen Anwendungssituationen realisieren. Eine Linearführung weist im Allgemeinen eine Führungsschiene, wie z. B. eine Welle oder eine Profilschiene, und einen Linear- bzw. Führungswagen auf, der, gemäß manchen Ausführungsformen, insbesondere bei Linearkugellagern, auch als zylindrische Buchse ausgebildet sein kann, und welcher linear beweglich auf der Führungsschiene angeordnet ist. Insbesondere bei Anwendungssituationen, bei denen eine Amplitude der Linearbewegung in einer Größenordnung der Außenabmessungen des Führungswagens parallel zur Bewegungsrichtung liegt oder diese sogar übersteigt, werden häufig so genannte Kugelumlaufführungen eingesetzt. Eine Kugelumlaufführung zeichnet sich dadurch aus, dass der Führungswagen mittels Kugeln relativ zur Führungsschiene beweglich gelagert ist und dass die Kugeln auf einer geschlossenen, also quasi endlosen, Bahn umlaufen. Eine Kugelumlaufführung ermöglicht somit eine beliebige lineare Beweglichkeit des Führungswagens relativ zu Führungsschiene, die nur durch die Abmessungen der Führungsschiene und gegebenenfalls durch eine Einbauumgebung begrenzt wird.

Bei den auch als Kugelbuchsen bezeichneten Linearkugellagern umgreift typischerweise ein als zylindrische Buchse ausgebildeter Führungswagen oder Käfig mit einem im Wesentlichen zylindrischen Querschnitt eine als Führungsschiene wirkende, insbesondere runde, Welle, weshalb diese spezielle Form der Linearführung auch als Wellenführung bezeichnet werden kann. Dabei ist die Buchse auf der Welle wälzgelagert, sodass sie einen äußeren Führungsteil des Linearkugellagers bildet, während die Welle einen inneren Führungsteil des Linearkugellagers bildet.

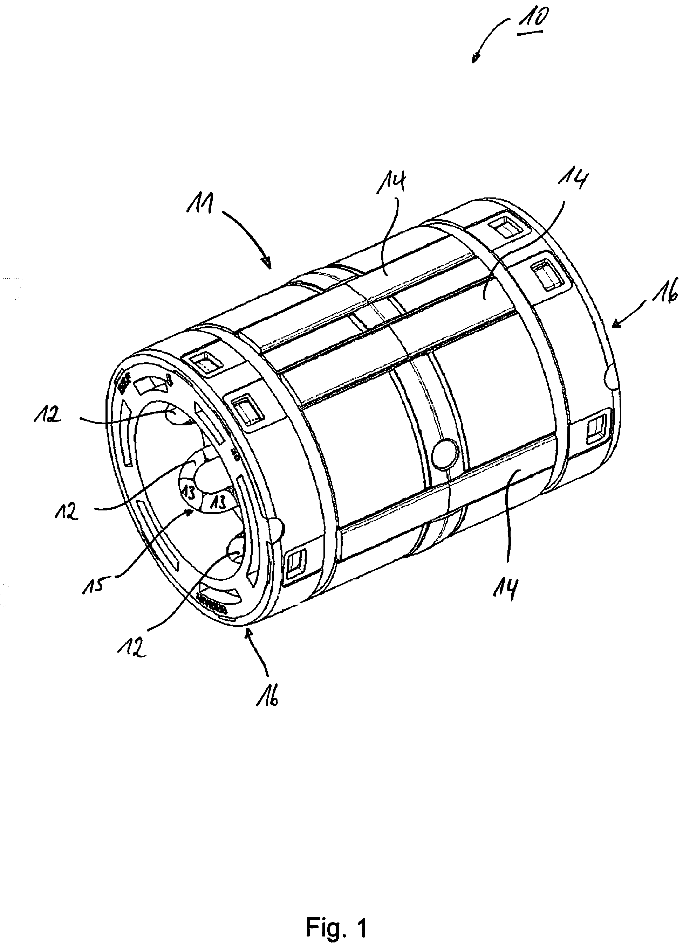

Die Fig. 1 zeigt zur Veranschaulichung eine perspektivische Darstellung einer als Linearkugellager 10 ausgebildeten herkömmlichen Linearführung.

Die herkömmliche Linearführung 10 umfasst eine in der Fig. 1 nicht dargestellte Welle als inneres Führungsteil, sowie eine die Welle zylindrisch umgebende Buchse 11, die im Nachfolgenden auch als Käfig bezeichnet wird. Die Buchse bzw. der Käfig 11 umfasst wiederum eine Mehrzahl von endlosen Wälzkörper- bzw. Kugelumläufen 12. Ein endloser Kugelumlauf 12 wird durch einen Kugelkanal gebildet, welcher in einen Vorlauf- bzw. Last-/Tragkanal und einen Rücklaufkanal unterteilt werden kann. Im Vorlaufkanal befindet sich jeweils eine (während des Betriebs) momentan tragende Kugelreihe, d. h. diejenigen Kugeln 13, welche den zylindrischen Käfig 11 gegenüber der Welle abstützen. Die in dem Vorlaufkanal befindlichen Kugeln 13 rollen dabei zwischen einer durch die Wellenoberfläche gebildeten Laufbahn und einer seitens des Käfigs bzw. der Buchse 11 befindlichen Gegenlaufbahn 14 ab. Über Umlenkbereiche 15, welche in der gemäß Fig. 1 dargestellten Lageranordnung 10 in Schlussringen 16 untergebracht sind, können die Kugeln 13 aus dem Vorlaufkanal in einen entsprechenden lastfreien Rücklaufkanal des Käfigs 11 umgelenkt werden, und umgekehrt. Dadurch entsteht ein endloser Kugelumlauf in dem Kugelführungskanal 12. Die Lageranordnung 10 kann über an den Schlussringen 16 befindliche Dichtungen gegenüber einer äußeren Umgebung abgedichtet werden. In den Umlenkteilen bzw. Schlussringen 16 können sich zur Schmierung der Wälzkörper 13 ebenfalls Schmiermitteldepots befinden.

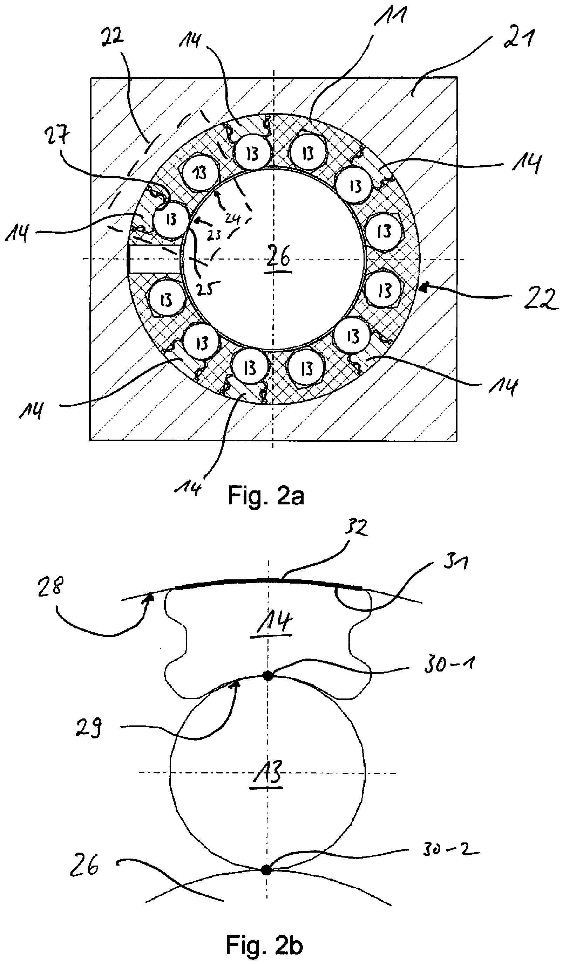

Die Fig. 2a zeigt eine Querschnittsdarstellung der Linearführungsanordnung 10 gemäß Fig. 1, welche in einem Gehäuse 21 verbaut ist.

In der Querschnittsdarstellung der Fig. 2a lassen sich insgesamt sechs Kugelführungskanäle 22 erkennen, die jeweils wiederum in Vorlauf- bzw. Tragkanäle 23 und Rücklaufkanäle 24 unterteilt werden können. In den Vorlaufkanälen 23 rollen die Wälzkörper bzw. Kugeln 13 zwischen Rollbahnen 25, die durch die Wellenoberfläche der Welle 26 gebildet werden, und Gegenlaufbahnen 27 ab. Die Gegenlaufbahnen 27 werden durch in den Käfig 11 eingepasste Laufbahnstücke bzw. -einsätze 14 gebildet, welche beispielsweise aus gehärtetem Stahl gefertigt sein können. Die in dem Vorlaufkanal 23 geführten Wälzkörper 13 werden vermittels der anhand der Fig. 1 beschriebenen Umlenkbereiche 15 in einen entsprechenden Rücklaufkanal 24 umgelenkt, in dem sie während des Betriebs der Linearführung 10 unbelastet zurückgeführt werden, um danach wiederum in den Vorlaufkanal 23 einzutreten.

Gemäß der in der Fig. 2a dargestellten Linearführungsanordnung sind die durch den Käfig 11 gebildeten Abschnitte der Kugelführungskanäle 22, umfassend die Kugelvorlauf- und Kugelrücklaufkanäle 23, 24, in einer Querschnittsebene senkrecht zur Wellenachse jeweils mehreckig bzw. polygonal ausgebildet. Dadurch ergeben sich in den Kugelrücklaufkanälen 24 definierte Kontaktbereiche zwischen den umlaufenden Kugeln 13 und diese umgebende und tangential dazu verlaufende Mantelflächenabschnitte der Kugelrücklaufkanäle 24. Darauf soll hier jedoch nicht näher eingegangen werden.

Die Fig. 2b zeigt eine vergrößerte Querschnittsdarstellung eines Kugelvorlaufkanals 23, in dem eine Kugel 13 zwischen der Welle 26 und der in den Käfig 11 eingesetzten Laufbahn 14 abrollt. Der zylindrische Käfig 11 befindet sich samt der Laufbahnstücke 14 in einer Gehäusebohrung des Lagergehäuses 21. Eine zylindrische Innenfläche der Gehäusebohrung ist in der Fig. 2b mit dem Bezugszeichen 28 versehen. Die Laufbahn bzw. das Laufbahnstück 14 weist eine den umlaufenden Kugeln 13 zugewandte und konkav geformte Laufbahnoberfläche 29 auf. Die konkave bzw. gewölbte Laufbahnoberfläche 29 verläuft dabei herkömmlicherweise im Querschnitt kreisbogenförmig, d. h. rund. Dabei ist eine Krümmung der Laufbahnoberfläche 29 weniger stark ausgeprägt als eine Krümmung der Kugeloberfläche der Kugel 13, die zwischen der Laufbahnoberfläche 29 und der Oberfläche der Welle 26 abrollt. Durch die geringere Krümmung der Laufbahnoberfläche 29 im Vergleich zur Kugeloberfläche ergeben sich in belastetem Zustand zwei definierte Kontaktpunkte zwischen Kugel 13, der Wellenoberfläche und der der Kugel zugewandten Laufbahnoberfläche 29. Die beiden definierten Kontaktpunkte im Vorlaufkanal 23 sind dabei mit den Bezugszeichen 30-1 und 30-2 versehen.

Des Weiteren lässt sich aus der Fig. 2b erkennen, dass eine der Gehäusebohrung zugewandte, radial außen gelegene Oberfläche 31 der Laufbahn 14 in ihrer Kontur der Oberfläche 28 der Gehäusebohrung angepasst ist. In anderen Worten ausgedrückt ist eine Krümmung der radial außen gelegenen Oberfläche 31 der Laufbahn gleich einer Krümmung der zylindrischen Gehäusebohrung. Somit ergibt sich zwischen der Innenfläche 28 der Gehäusebohrung und der Außenfläche 31 der Laufbahn 14 ein großflächiger Kontaktbereich 32, der sich nahezu über die gesamte Laufbahnaußenfläche 31 erstreckt.

Es sind also Linearlager bekannt, deren Laufbahnkonturen nach außen einer Kontur der Gehäusebohrung und nach innen dem Kugeldurchmesser (Schmiegung mit einem herkömmlichen 1-Punkt-Kontakt) angepasst sind. Aus wirtschaftlichen Gründen werden oftmals gleiche Laufbahnprofile für mehrere Lagerbaugrößen eingesetzt. In solchen Fällen ist es notwendig, aufgrund der Kombination Laufbahnprofil mit kleinerer Kugel (wegen kleineren Baugrößen der Linearlager) und der daraus resultierenden größeren Schmiegung Tragzahlverluste zu akzeptieren. Dabei entsteht ein weiterer Nachteil für die abgeleiteten, kleineren Kugelreihen. Da die Laufbahnkontur auf der Außenseite nicht der Gehäusebohrung entspricht, ist eine Ermittlung der Kugelsortierung und die Abstimmung des Betriebsspiels erschwert. Größere Schwankungen im umfangreichen Fertigungsprozess der Laufbahnen, der z. B. Ziehen, Richten, Ablängen, Härten und Trowalisieren umfasst, können schnell zu Qualitätsproblemen des Endprodukts bzw. zu Reklamationen führen.

Aus EP 1 936 216 A1 ist ein lineares Wälzlagerelement mit zwei endlosen und im Kanalverlauf stufenlos ineinander übergehenden Wälzkörperkanälen für tragende Wälzkörper und nicht tragende Wälzkörperbekannt. Jeder Wälzkörperkanal ist aus einer Traglaufbahn an einem Tragkörper für die tragenden Wälzkörper, aus einem jeweiligen Rücklaufkanal, gebildet mittels eines Käfigelements, für die rücklaufenden, nicht tragenden Wälzkörper und aus nicht besonders dargestellten Umlenkkanälen gebildet. Der Tragkörper weist auf seiner den beiden nebeneinander verlaufenden Traglaufbahnen abgewandten Rückseite zumindest eine konvex gekrümmte Außenfläche auf. Die Traglaufbahnen sind im Querschnitt betrachtet jeweils aus zwei Bogenabschnitten unterschiedlicher Radien zusammengesetzt und bilden so Vierpunktanlagen für die kugelförmigen Wälzkörper.

Es ist daher eine Aufgabe der vorliegenden Erfindung, ein verbessertes Konzept für kugelgelagerte Linearführungen bereitzustellen.

Diese Aufgabe wird gelöst durch eine Laufbahn für eine Linearführung mit den Merkmalen des Anspruchs 1, einer Linearführung gemäß Anspruch 5 und einem Verfahren zum Betreiben einer Linearführung gemäß Anspruch 6.

Es ist ein Kerngedanke der vorliegenden Erfindung, ein Abrollverhalten einer Kugel in einem Vorlaufkanal einer Linearführung zu verbessern, indem während des Betriebs der Linearführung, d. h. unter Last, ein definierter 3-Punkt-Kontakt zwischen einer umlaufenden Kugel, einer Welle und einer (Gegen-) Laufbahn im Käfig geschaffen wird. In anderen Worten ausgedrückt bedeutet dies einen 2-Punkt-Kontakt zwischen einer im Vorlaufkanal umlaufenden Kugel und der am Käfig angeordneten Laufbahn. Durch diesen vordefinierten 2-Punkt-Kontakt zwischen Kugel und Laufbahn (bzw. 3-Punkt-Kontakt, wenn man zusätzlich die Welle berücksichtigt) kann eine Tragzahl des Linearlagers bzw. der Linearführung erhöht werden.

Dazu ist eine entsprechend ausgebildete Laufbahn für eine Linearführung vorgesehen. Die Linearführung umfasst einen als Welle ausgebildeten inneren Führungsteil und einen Käfig umfassendes äußeres Führungsteil. Das äußere und das innere Führungsteil, d. h. also der Käfig und die Welle, sind vermittels in dem Käfig umlaufender Kugeln relativ zueinander in Richtung der Wellenachse beweglich. Die Laufbahn der Linearführung weist eine (im Betrieb) umlaufenden Kugeln zugewandte Laufbahnoberfläche auf, auf welcher die Kugeln zwischen der Laufbahnoberfläche und einer Oberfläche der Welle während des Betriebs der Linearführung abrollen können. Dabei ist die den Kugeln zugewandte (d.h. radial innen liegende) Laufbahnoberfläche derart ausgebildet, dass an der Laufbahnoberfläche für eine zwischen der Laufbahnoberfläche und der Wellenoberfläche abrollende Kugel zwei vordefinierte und in Umfangsrichtung der Kugel voneinander beabstandete Kontaktbereiche bzw. -punkte bereitgestellt werden, an denen die Kugel abrollen kann. "Vordefiniert" meint hier, dass die beiden Kontaktbereiche sich während des Betriebs nicht zufällig ergeben, sondern dass sie vorab bewusst als vorbestimmte Kontaktbereiche bzw. -flächen für umlaufende Kugeln ausgebildet werden.

Dabei ist die radial innen liegende Laufbahnoberfläche derart geformt, dass durch ihre Geometrie im Betrieb der Linearführung genau zwei vordefinierte Kontaktbereiche bzw. - punkte für die umlaufenden Kugeln bereitgestellt werden. Zusammen mit einem Kontaktpunkt für eine umlaufende Kugel auf der Welle ergeben sich für die Kugel dann genau drei Kontaktstellen im Kugelvorlaufkanal während des Kugelumlaufs. Dieser 3-Punkt-Kontakt im Vorlaufkanal während des Betriebs zwischen einer umlaufenden Kugel, der Welle und der Gegenlaufbahn im Käfig wirkt sich positiv auf eine Tragzahl der Linearführung aus. In anderen Worten ausgedrückt können so Tragzahlen von linearen Kugelführungen erhöht werden.

Betrachtet man eine erfindungsgemäße Linearführung im Querschnitt senkrecht zur Wellenachse, so sind also genau zwei vordefinierte und in Umfangsrichtung der umlaufenden Kugel voneinander beabstandete Kontaktpunkte an der Laufbahnoberfläche der (Gegen-) Laufbahn vor und einen zusätzlichen Kontaktpunkt zwischen umlaufender Kugel und Welle vorgesehen. Das bedeutet, dass die beiden vordefinierten Kontaktbereiche an der Laufbahnoberfläche derart ausgebildet sind, dass die Kugel im Betrieb der Linearführung beim Abrollen mit den zwei Kontaktbereichen jeweils eine im Wesentlichen gerade verlaufende Linie auf der ihr zugewandten Laufbahnoberfläche der Gegenlaufbahn im Käfig beschreibt.

Die den im Betrieb umlaufenden Kugeln zugewandte Laufbahnoberfläche der (Gegen-) Laufbahn ist im Wesentlichen konkav ausgebildet. Das heißt, die Laufbahnoberfläche ist derart gekrümmt, dass sie eine umlaufende Kugel in Umfangsrichtung teilweise umschließt, um sie zu führen. "Konkav gekrümmt" umfasst dabei im Querschnitt senkrecht zur Wellenachse auch abschnittsweise gerade verlaufende Laufbahnoberflächenabschnitte. Generell kann die Laufbahnoberfläche in einer zur Kugel weisenden radialen Richtung vorstehende und demgegenüber zurückversetzte Laufbahnoberflächenabschnitte aufweisen, wobei die beiden vordefinierten Kontaktbereiche der Laufbahnoberfläche durch radial zumindest teilweise vorstehende und in Umfangsrichtung voneinander beabstandet angeordnete Laufbahnoberflächenabschnitte gebildet werden.

Erfindungsgemäß weist die Laufbahn in einer Ebene senkrecht zu einer axialen Erstreckung (entsprechend der Längsachse) der Linearführung bzw. der Laufbahn einen mehreckigen Querschnitt, wie z. B. einen teilweise polygonalen Querschnitt, auf. Das bedeutet, die konkave Laufbahnoberfläche wird erfindungsgemäß nicht rund, sondern mehreckig mit ebenen Laufbahnoberflächenabschnitten ausgeführt. Dabei sind drei ebene und parallel zur Längsrichtung der Laufbahn verlaufende Laufbahnoberflächenabschnitte vorgesehen, wobei davon zwei ebene Laufbahnoberflächenabschnitte die umlaufenden Kugeln tangential führen. Das heißt, die beiden Laufbahnoberflächenabschnitte, welche die beiden vordefinierten Kontaktbereiche umfassen, sind Tangentialflächenabschnitte, welche tangential zur Kugeloberfläche einer im Betrieb umlaufenden Kugel verlaufen.

Gemäß anderen Ausführungen, die nicht zur Erfindung gehören, kann die den Kugeln zugewandte Laufbahnoberfläche in einer Ebene senkrecht zur axialen Erstreckung der Laufbahn einen im Wesentlichen runden Querschnitt aufweisen, mit in Umfangsrichtung entlang der Laufbahnoberfläche in vordefinierten Abständen angeordneten und als Kontaktbereiche dienenden radial nach innen weisenden Vorsprüngen. Bei solchen Ausführungen sind die beiden vorstehenden Laufbahnoberflächenabschnitte, d. h. die Vorsprünge, welche als die beiden Kontaktflächen dienen, beispielsweise konvex ausgebildet, wohingegen die übrigen zurückversetzten Laufbahnoberflächenabschnitte konkav gekrümmt geformt sein können.

Die genau zwei vordefinierten und in Umfangsrichtung der Kugel voneinander beabstandeten Kontaktbereiche bzw. Kontaktflächen der Laufbahnoberfläche sind vorzugsweise symmetrisch zu einer in radialer Richtung verlaufenden Symmetrieachse der Laufbahn bzw. einer auf der Laufbahn abrollenden Kugel angeordnet. Das bedeutet, dass beispielsweise zwei ebene Laufbahnoberflächenabschnitte, welche Tangentialflächenabschnitte für eine auf der Laufbahn umlaufende Kugel bilden, mit der Symmetrieachse betragsmäßig gleiche Winkel einschließen. Das gilt ebenso für Lote der Tangentialflächenabschnitte durch die jeweiligen Kontaktpunkte zwischen Kugel und Tangentialflächenabschnitt.

Die erfindungsgemäße Laufbahn wird insbesondere für lineare Kugelführungen eingesetzt, bei denen der äußere Führungsteil bzw. der Käfig als zylindrische Buchse ausgebildet ist, die von einer zylindrischen Gehäusebohrung aufgenommen werden kann. Die (Gegen-) Laufbahn kann dabei derart in die zylindrische Buchse bzw. den Käfig eingesetzt werden, dass die den umlaufenden Kugeln zugewandte Laufbahnoberfläche radial ins Innere des Käfigs, also in Richtung Welle, weist. Eine der Gehäusebohrung zugewandte, d. h. radial nach außen weisende Oberfläche der Laufbahn weist eine größere Krümmung auf als die Gehäusebohrung. Es wird also eine Laufbahn für eine Linearführung mit einem als Welle ausgebildeten inneren Führungsteil und einem als zylindrische Buchse ausgebildeten Käfig als äußeres Führungsteil bereitgestellt. Der Käfig ist relativ zu der Welle vermittels in dem Käfig umlaufender Kugeln beweglich. Die die zylindrische Buchse bzw. der Käfig kann von einer zylindrischen Lagergehäusebohrung aufgenommen werden. Die Laufbahn kann derart in den durch die zylindrische Buchse gebildeten Käfig eingesetzt werden, dass eine den umlaufenden Kugeln zugewandte Laufbahnoberfläche, auf welcher die Kugeln zwischen der Laufbahn und einer Oberfläche der Welle abrollen können, radial ins Innere der Buchse weist. Die Laufbahn ist derart ausgebildet, dass an der den umlaufenden Kugeln zugewandten (radial innere) Laufbahnoberfläche für eine zwischen der Laufbahnoberfläche und der Oberfläche der Welle abrollende Kugel zwei vordefinierte und in Umfangsrichtung der Kugel voneinander beabstandete Kontaktbereiche bereitgestellt werden, an denen die Kugel abrollen kann. Des Weiteren weist eine der Lagergehäusebohrung zugewandte (radial äußere) Laufbahnoberfläche eine größere Krümmung als die zylindrische Lagergehäusebohrung auf, so dass sich beim Einbringen der zylindrischen Buchse mit der darin eingesetzten Laufbahn in die Lagergehäusebohrung ein linienförmiger Kontaktbereich zwischen der Laufbahn und der Lagergehäusebohrung ausbildet. Dadurch kann sich beim Einbringen der zylindrischen Buchse mit der Laufbahn in die Gehäusebohrung ein linienförmiger Kontaktbereich zwischen Laufbahnaußenseite und Gehäusebohrung ausbilden. Im Querschnitt senkrecht zur Wellenachse bedeutet dies wiederum einen definierten Kontaktpunkt zwischen Laufbahnaußenseite und Gehäusebohrung. Dies hat den Vorteil, dass derart geformte Laufbahnen für mehrere Lagergrößen eingesetzt werden können. Beispielsweise kann die Krümmung der Laufflächenaußenseite an eine kleinste Lagergröße, und damit an einen kleinsten Gehäusedurchmesser, angepasst sein. Für größere Gehäusedurchmesser ergibt sich dann beim Einbringen des Käfigs samt Laufbahn der beschriebene Ein-Punkt- bzw. Ein-Linien-Kontakt zwischen Laufbahnaußenseite und Gehäusebohrung. Dies ermöglicht ein einfacheres Messen der Laufbahndicke und eine prozesssicherere Automatisierung in einer Montagemaschine. Ein Einfluss von Laufbahndickenschwankungen bei einer gleichen Kugelsortierung und ein Einfluss auf das gewünschte Betriebsspiel kann so minimiert werden.

Gemäß einem weiteren Aspekt der vorliegenden Erfindung wird eine Linearführung mit einem als zylindrische Buchse ausgebildeten Käfig vorgeschlagen, in welchen wenigstens eine erfindungsgemäße Laufbahn eingesetzt ist, wobei der Käfig mit der wenigstens einen eingesetzten bzw. aufgenommenen Laufbahn in der zylindrischen Lagergehäusebohrung gelagert ist. Der Käfig ist dabei also in die Gehäusebohrung eingebaut, d.h., befindet sich in eingebautem Zustand.

Ein weiterer Aspekt sieht ein Verfahren zum Herstellen einer Linearführung vor, mit einem als Welle ausgebildeten inneren Führungsteil und einem als zylindrische Buchse ausgebildeten Käfig als äußeres Führungsteil. Der Käfig ist relativ zu der Welle vermittels in dem Käfig umlaufender Kugeln beweglich. Die zylindrische Buchse bzw. der Käfig kann von einer zylindrischen Lagergehäusebohrung mit einem vorbestimmten Radius aufgenommen werden. Eine Laufbahn kann derart in den durch die zylindrische Buchse gebildeten Käfig eingesetzt werden, dass eine den umlaufenden Kugeln zugewandte Laufbahnoberfläche, auf welcher die Kugeln zwischen der Laufbahn und einer Oberfläche der Welle während eines Betriebs der Linearführung abrollen können, radial ins Innere der Buchse weist. Erfindungsgemäß umfasst das Verfahren folgende Schritte:
- Bereitstellen der Laufbahn, sodass an der den umlaufenden Kugeln zugewandten Laufbahnoberfläche für eine zwischen der Laufbahnoberfläche und der Oberfläche der Welle abrollende Kugel zwei vordefinierte und in Umfangsrichtung der Kugel voneinander beabstandete Kontaktbereiche bereitgestellt werden, an denen die Kugel abrollen kann, und die Laufbahnoberfläche in einer Ebene senkrecht zu einer axialen Erstreckung der Laufbahn einen mehreckigen Querschnitt aufweist, so dass die Laufbahnoberfläche drei parallel zu einer Längsachse der Laufbahn polygonal angeordnete, ebene Laufbahnoberflächenabschnitte aufweist und die zwei Kontaktbereiche durch zwei der Laufbahnoberflächenabschnitte gebildet werden, und sodass eine der Lagergehäusebohrung zugewandte Oberfläche der Laufbahn eine größere Krümmung als die zylindrische Lagergehäusebohrung aufweist, sodass sich beim Einbringen der zylindrischen Buchse mit der Laufbahn in die Lagergehäusebohrung ein linienförmiger Kontakt zwischen Laufbahn und Lagergehäusebohrung ausbilden kann,
- Einsetzen der Laufbahn in den als zylindrische Buchse ausgebildeten Käfig, und
- Einbringen des zylindrischen Käfigs mit der darin befindlichen Laufbahn in die zylindrische Lagergehäusebohrung, sodass sich zwischen der der Lagergehäusebohrung zugewandten Oberfläche der Laufbahn und der Lagergehäusebohrung der linienförmige Kontakt zwischen Laufbahn und Lagergehäusebohrung ergibt.

Weitere vorteilhafte Ausführungsformen und Weiterbildungen sind Gegenstand der nachfolgenden detaillierten Beschreibung von Ausführungsbeispielen sowie der nachfolgenden abhängigen Ansprüche.

Durch das hier vorgeschlagene Laufbahnprofil für lineare Kugelführungen ergibt sich während des Betriebs der Kugelführungen eine stabile 3-Punkt-Lage für eine umlaufende Kugel. Ebenso ergibt sich im eingebauten Zustand der Linearführung in eine Gehäusebohrung durch manche Ausführungsbeispiele eine stabile 3-Punkt-Lage für die Laufbahn. Durch den vorgeschlagenen Zwei-Punkt-Kontakt zwischen Kugel und Laufbahn kann eine Tragzahl erhöht werden, wodurch sich wiederum längere Lebensdauern, insbesondere bei längeren Hüben, von Linearführungen ergeben können. Für im Vergleich zum Stand der Technik theoretisch gleiche Tragzahlen ermöglichen Ausführungsbeispiele eine geringere Härte des Laufbahnmaterials, wodurch sich eine größere Auswahl an Grundmaterialien, wie z. B. Ziehstähle, für Laufbahnen ergibt. Weichere Grundmaterialien ermöglichen wiederum eine einfachere Bearbeitung der Laufbahnprofile, z. B. eine Bearbeitung der Einlaufkontur.

Einige Ausführungsbeispiele der vorliegenden Erfindung werden nachfolgend bezugnehmend auf die beiliegenden Figuren näher erläutert. Es zeigen:
- Fig. 1: eine perspektivische Darstellung eines zylindrischen Käfigs mit herkömmlichen Laufbahnen für eine Linearkugellagerung;
- Fig. 2a: eine Querschnittdarstellung einer in ein Gehäuse eingebauten herkömmlichen Linearführung mit Welle, Käfig und darin umlaufenden Kugeln;
- Fig. 2b: eine vergrößerte Darstellung eines herkömmlichen Vorlaufkanals der Linearführung gemäß Fig. 2a;
- Fig. 3a: eine vergrößerte Querschnittdarstellung eines Vorlaufkanals einer Linearführung mit einer Laufbahn gemäß einem erfindungsgemäßen Ausführungsbeispiel der vorliegenden Erfindung;
- Fig. 3b: eine schematische Querschnittdarstellung zur Veranschaulichung des Einsatzes einer erfindungsgemäßen Laufbahn für unterschiedliche Kugeldurchmesser;
- Fig. 4a: eine vergrößerte Querschnittdarstellung eines Vorlaufkanals einer Linearführung mit einer Laufbahn gemäß einer nicht erfindungsgemäßen Ausführung;
- Fig. 4b: eine vergrößerte Querschnittdarstellung eines Vorlaufkanals einer Linearführung mit einer Laufbahn mit einem gotischen Profil, gemäß einer weiteren nicht erfindungsgemäßen Ausführung;
- Fig. 5a: eine Querschnittdarstellung zur Veranschaulichung einer Krümmung einer äuβeren Laufbahnoberfläche im Vergleich zur Krümmung einer Gehäusebohrung; und
- Fig. 5b: eine Darstellung eines Systems aus Linearlager in einem Gehäuse auf einer Welle mit mindestens drei Laufbahnen.

In der nachfolgenden exemplarischen Beschreibung einiger Ausführungsbeispiele beziehen sich gleiche Bezugszeichen auf gleiche, ähnliche oder funktional gleiche Bauteile.

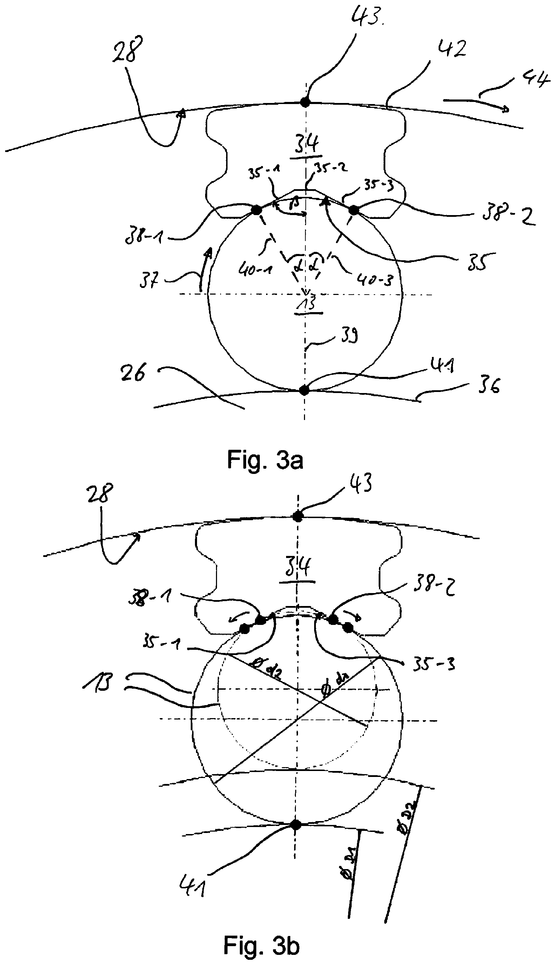

Nachdem anhand der Fig. 1 bis 2b Linearführungen mit herkömmlichen Laufbahnen erläutert wurden, wird im Nachfolgenden anhand der Fig. 3a und Fig. 3b ein Ausführungsbeispiel für eine Laufbahn einer Linearführung gemäß der vorliegenden Erfindung beschrieben.

Die Fig. 3a zeigt eine vergrößerte Querschnittdarstellung eines Vorlaufkanals einer erfindungsgemäßen Linearführung (Linearkugellager), wobei eine Kugel 13 zwischen einer Welle 26 und einer (Gegen-) Laufbahn 34 der Linearführung geführt wird. Zur besseren Übersicht ist in der Fig. 3a ein Käfig, welcher die (Gegen-) Laufbahn 34 aufnimmt, nicht gezeigt. Die Laufbahn 34 weist eine der umlaufenden Kugel 13 zugewandte (d.h. radial innen liegende) Laufbahnoberfläche 35 auf, auf welcher die Kugel 13 zwischen der Laufbahnoberfläche 35 und einer Wellenoberfläche 36 während des Betriebs der Linearführung abrollen kann. Es lässt sich erkennen, dass die Laufbahnoberfläche 35 derart ausgebildet ist, dass an der Laufbahnoberfläche 35 für eine zwischen der Laufbahnoberfläche 35 und der Wellenoberfläche 36 abrollende Kugel 13 zwei vordefinierte und in Umfangsrichtung 37 der Kugel voneinander beabstandete Kontaktbereiche bzw. -punkte 38-1 und 38-2 bereitgestellt werden, an denen die Kugel 13 in axialer Richtung abrollen kann. Eine genaue Lage der Kontaktpunkte 38-1 und 38-2 ist durch die Geometrie der Laufbahnoberfläche 35 und den Kugeldurchmesser festgelegt.

In der Darstellung des Querschnitts senkrecht zur Wellenachse gemäß der Fig. 3a stellen sich die beiden vordefinierten Kontaktbereiche 38-1 und 38-2 als vordefinierte Kontaktpunkte der Kugel 13 mit der Laufbahnoberfläche 35 dar. Beim Abrollen der Kugel 13 im Betrieb der Linearführung beschreiben diese mit der Kugel entlang der Laufbahn 34 wandernden Kontaktpunkte 38-1 und 38-2 jeweils eine im Wesentlichen gerade verlaufende Linie auf der Laufbahnoberfläche 35 entlang der Längs- bzw. Erstreckungsrichtung der Laufbahn 34. Gemäß dem in der Fig. 3a dargestellten Ausführungsbeispiel weist die Laufbahnoberfläche 35 in einer Ebene senkrecht zur axialen Erstreckung der Laufbahn 34 einen mehreckigen, insbesondere teilweise polygonalen Querschnitt auf. Dazu weist die Laufbahnoberfläche 35 in der dargestellten Form drei ebene Laufbahnoberflächenabschnitte 35-1, 35-2 und 35-3 auf, welche alle drei parallel zur Längsachse bzw. Erstreckungsrichtung der Laufbahn 34 (in die Zeichenebene hinein) angeordnet sind. Die Laufbahnoberfläche 35 weist also in einer Ebene senkrecht zu einer axialen Erstreckung der Laufbahn 34 einen mehreckigen, insbesondere teilweise polygonalen, Querschnitt auf, so dass die beiden Kontaktbereiche 38-1, 38-2 durch parallel zu einer Längsachse der Laufbahn 34 polygonal angeordnete, ebene Laufbahnoberflächenabschnitte 35-1 und 35-3 gebildet werden. Demgemäß kann die Lauffläche 35 also als symmetrische eckige Rinne mit ebenen Begrenzungsflächen 35-1, 35-2 und 35-3 ausgebildet werden, von denen zwei (35-1 und 35-3) die Kontaktpunkte 38-1 und 38-2 bereitstellen. Die drei Laufbahnoberflächenabschnitte 35-1 bis 35-3 sind gemäß der gezeigten Ausführungsform achsensymmetrisch zu einer radial verlaufenden Symmetrieachse 39 durch die Kugel 13 bzw. die Laufbahn 34 angeordnet. Während der mittlere Oberflächenabschnitt 35-2 im Wesentlichen senkrecht zur Symmetrieachse 39 verläuft, sind die beiden äußeren ebenen Laufbahnoberflächenabschnitte 35-1 und 35-3 schräg dazu angeordnet, vergleichbar mit Schenkeln eines gleichschenkligen Dreiecks. Die in der Fig. 3a horizontal verlaufene Fläche 35-2 könnte in einer nicht erfindungsgemäßen Ausführung auch weggelassen werden, so dass sich die beiden schrägen Flächen 35-1 und 35-3 auch unmittelbar auf der Symmetrieachse 39 treffen könnten. Die beiden ebenen und schrägen Laufbahnoberflächenabschnitte 35-1 und 35-3 können Tangentialflächenabschnitte für die auf der Laufbahn 34 umlaufende Kugel 13 bilden, wobei die Tangentialflächenabschnitte 35-1 und 35-3 im belasteten Zustand des Lagers tangential zur Kugeloberfläche verlaufen. Allgemeiner gesagt weist die Laufbahnoberfläche 35 also in einer zur Kugel 13 weisenden radialen Richtung (zumindest teilweise) vorstehende Laufbahnoberflächenabschnitte 35-1 und 35-3 und einen demgegenüber radial zurückversetzten Laufbahnoberflächenabschnitt 35-2 auf. Die zwei vordefinierten Kontaktbereiche 38-1 und 38-2 werden durch die in radialer Richtung gegenüber dem Laufflächenabschnitt 35-2 vorstehenden und in Umfangsrichtung 37 voneinander beabstandet angeordneten Laufbahnoberflächenabschnitte 35-1 und 35-3 gebildet.

Verbindungslinien 40-1 und 40-3 zwischen einem Mittelpunkt der umlaufenden Kugel 13 und den Kontaktpunkten 38-1 und 38-2 schließen mit der Symmetrieachse 39 jeweils einen Winkel α ein. Der Winkel α hängt, neben einem Neigungswinkel β der beiden schrägen Laufflächenabschnitte 35-1, 35-3 gegenüber der Symmetrieachse 39, von einem zur Verfügung stehenden Bauraum für die Linearführung bzw. einem Durchmesser der umlaufenden Kugeln 13 ab. Ein optimaler Winkel α im Hinblick auf eine maximale Tragzahl der Linearführung liegt bei α = 45°. Ausführungsbeispiele der vorliegenden Erfindung sehen Geometrien vor, bei denen der Winkel α vorzugsweise in einem Bereich von 20° bis 45° liegt. Dadurch kann vermittels der beiden vordefinierten Kontaktpunkte 38-1 und 38-2 im Zusammenspiel mit einem Kontaktpunkt 41 zwischen der Kugel 13 und der Oberfläche der Welle 26 eine besonders gute Tragzahl der linearen Kugelführung erreicht werden. Dabei sollte berücksichtigt werden, dass Faktoren wie Umgebungskonstruktion, Funktionalität des Linearlagers, Materialeinsatz (z.B. Gewichtssteigerung) für die Bestimmung des Winkels α mitentscheidend sein können und sogar höher gewichtet werden können als die Steigerung der Tragzahl.

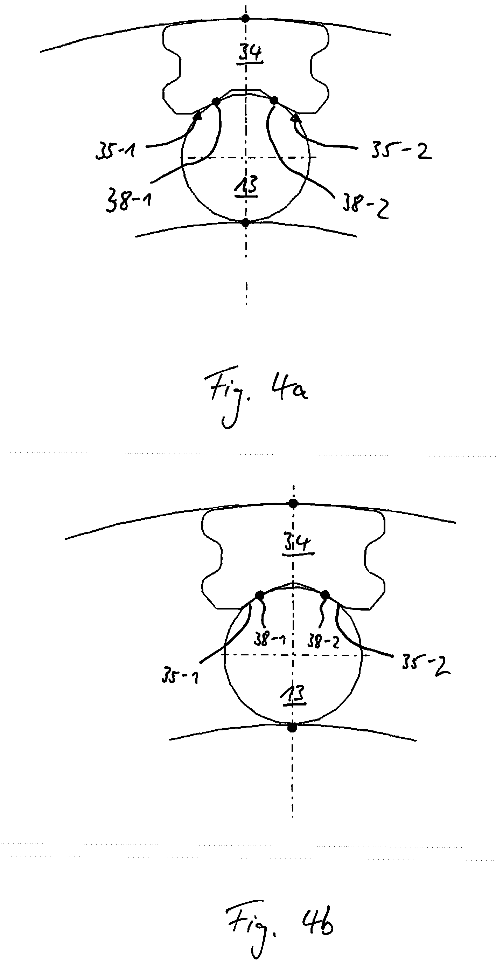

An dieser Stelle sei lediglich der Vollständigkeit halber erwähnt, dass die beiden vordefinierten und in Umfangsrichtung 37 beabstandeten Kontaktpunkte 38-1 und 38-2 in nicht erfindungsgemäßen Ausführungen auch durch andere Geometrien der Laufbahnoberfläche 35 erhalten werden können, wie es beispielhaft in den Fig. 4a und 4b gezeigt ist. Beispielsweise kann die Laufbahnoberfläche 35 in einer Ebene senkrecht zu der axialen Erstreckung der Laufbahn 34 auch im Wesentlichen rund verlaufen, mit in Umfangsrichtung 37 entlang der Laufbahnoberfläche in vordefinierten Abständen angeordneten und als Kontaktbereichen dienenden in Richtung Kugel 13 weisenden Vorsprüngen (siehe Fig. 4a). Dabei können die vorstehenden Laufbahnoberflächenabschnitte, d. h. die Vorsprünge, welche als Kontaktflächen dienen, beispielsweise konvex ausgebildet sein, wohingegen die übrigen zurückversetzten Laufbahnoberflächenabschnitte zylinderförmig bzw. konkav geformt sein können (in Fig. 4a nicht dargestellt). Des Weiteren kann anstelle der in der Fig. 3a gezeigten geraden, prismenartigen Kontaktflächen 35-1, 35-3 auch ein nicht erfindungsgemäßes, sogenanntes gotisches (Spitzbogen-) Profil verwendet werden, um eine weitere Steigerung der Tragzahlen zu ermöglichen (siehe Fig. 4b).

An einer radial nach außen weisenden Seite weist die Laufbahn 34 eine äußere Laufbahnoberfläche 42 auf, welche stärker gekrümmt ist als die Oberfläche 28 der zylindrischen Gehäusebohrung. Durch diese unterschiedlich starken Krümmungen der Oberflächen 42 und 28 ergibt sich zwischen der Laufbahn 34 und der Gehäusebohrung im Querschnitt ebenfalls ein definierter Kontaktpunkt 43. Mit "Krümmung" soll im Rahmen der vorliegenden Erfindung ein Maß für die Abweichung einer Oberfläche von einer Tangente durch den Kontaktpunkt 43 verstanden werden. Das heißt, in Umfangsrichtung 44 der Gehäusebohrung gesehen weichen Punkte auf der äußeren Laufbahnoberfläche 42 stärker von der Tangente durch den Punkt 43 ab als Punkte auf der Gehäusebohrungsoberfläche 28. D.h., ein Kreis bzw. ein Kreisbogen, durch den die äußere Laufbahnoberfläche 42 definiert wird, weist einen kleineren Radius auf als ein Kreisbogen, durch den die Gehäusebohrungsoberfläche 28 definiert wird. Die Krümmungen der beiden Oberflächen 28 und 42 unterscheiden sich vorzugsweise um nicht mehr als 40 %. Das bedeutet, dass die Krümmung *k_{B}* der Gehäusebohrungsoberfläche 28 um nicht mehr als 40% von der Krümmung *k_{L}* der äußeren Laufbahnoberfläche 42 abweicht, d.h. *0.6k_{L}* ≤ *k_{B} < k_{L}* oder *k_{B} < k_{L}* ≤ 1.4*k_{B}*. Insbesondere kann ein Unterschied der beiden Krümmungen in einem Bereich unterhalb von 20 % liegen. Wichtig ist, dass sich die beiden Krümmungen voneinander unterscheiden, und zwar nicht nur aufgrund von Fertigungstoleranzen. D.h., ein Unterschied der beiden Krümmungen (ausgehend von *k_{B}* oder *k_{L}*) sollte wenigstens 5%, bevorzugt wenigstens 10% und noch bevorzugter wenigstens 15 % betragen.

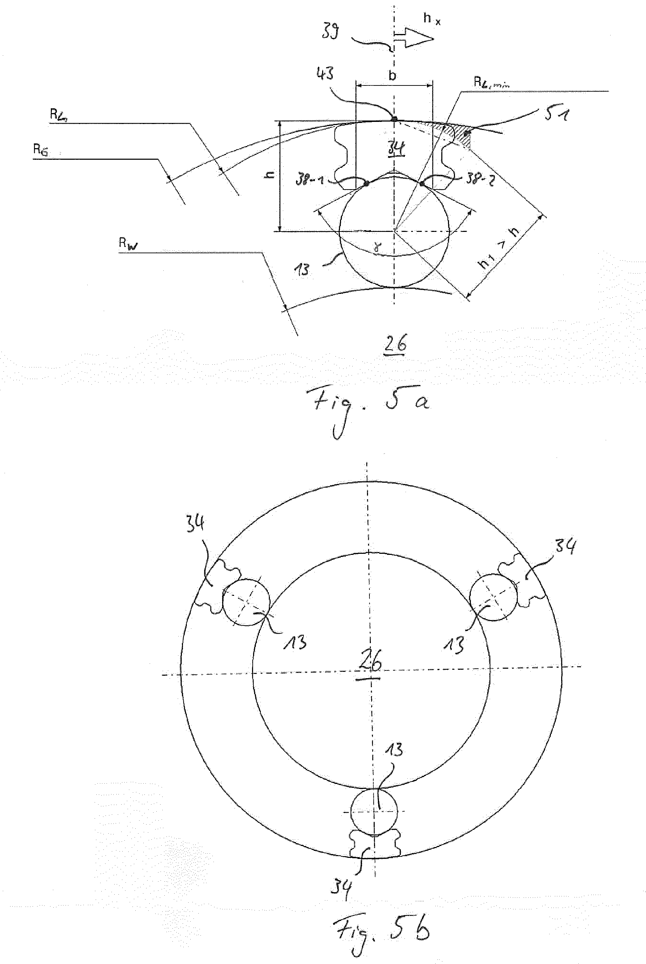

Auf die Krümmung der äußeren Laufbahnoberfläche 42 wird im Nachfolgenden anhand der Fig. 5a detaillierter eingegangen.

Das schraffierte Feld 51 zeigt einen Krümmungsbereich, in dem die Krümmung *k_{L}* der oberen Laufbahnoberfläche 42 liegen sollte, damit die Konstruktion und deren Funktion stabil bleibt. Einige Eckpunkte für Bedingungen, die eine stabile Konstruktion gewährleisten werden im Nachfolgenden dargelegt. Ein Laufbahnöffnungswinkel γ ist von mehreren Faktoren abhängig, hauptsächlich jedoch von der Größe des Linearlagers, d.h. der Größe der Kugel 13, Breite der Laufbahn 34, etc. Der Laufbahnöffnungswinkel γ nimmt indirekt Einfluss auf den Laufbahnradius R_{L}. Je kleiner der Laufbahnöffnungswinkel γ wird, desto kleiner wird ein minimaler Laufbahnradius R_{L,min}. Eine Breite b der Laufbahn 34 ist entscheidend für den stabilen 2-Punkt-Kontakt zwischen Kugel 13 und Laufbahn 34. Hier wird nur eine Schwenkung der Laufbahn 34 um die Kugelmitte betrachtet, solange der 2-Punkt-Kontakt der Laufbahn 34 mit der Kugel 13 bleibt. In der Skizze wird mit Hilfe des äußersten Kontaktpunktes der Kugel 13 in dem durch die Laufbahnoberfläche 35 gebildeten Prisma die Breite der Erstreckung der stabilen Zone 51 begrenzt.

Der minimale Laufbahnradius R_{L,min} kann durch eine Höhe h definiert werden, die wiederum als Entfernung von Kugelmitte und zum Kontaktpunkt 43 der Laufbahn 34 zur Gehäusebohrung ist. Nur wenn h1 (also der Laufbahnradius R_{L}) größer als h ist, wird die Konstruktion immer eine stabile Lage anstreben. Das bedeutet also, dass Laufbahnradius R_{L}, welcher die Krümmung *k_{L}* definiert, zwischen einem Radius R_{G} der Gehäusebohrung und der Entfernung h von Kugelmitte und zum Kontaktpunkt 43 liegen sollte. In anderen Worten liegt der Radius R_{L} der der Gehäusebohrung zugewandten Oberfläche 42 der Laufbahn 34 in einem Bereich, dessen Untergrenze einer Entfernung h von einer Kugelmitte einer im Betrieb zwischen der Welle 26 und der Laufbahn 34 umlaufenden Kugel 13 zum Kontaktpunkt 43 zwischen der äußeren Laufbahnoberfläche 42 und der Gehäusebohrung entspricht, und dessen Obergrenze unterhalb des Radius R_{G} der Gehäusebohrung liegt, so dass h ≤ R_{L} < R_{G} gilt. Mittelpunkte von Kreisbögen mit den unterschiedlichen Radien liegen dabei alle auf der Achse 39. Dadurch kann sich die Laufbahn 34 selbst zentrieren, unabhängig vom Radius Rw der Welle 26 und dem Radius R_{G} des Lagergehäuses, solange diese beiden einen gemeinsamen Ursprung haben. Dies ist aber immer der Fall. Auch wenn beide Radien R_{W} und R_{G} unendlich sein sollten. Mit anderen Worten, eine radiale Höhe h1 der Laufbahn 34 in der Richtung "hx" ab der Laufbahnmitte soll immer größer werden als h. Dann kann theoretisch der Winkel Laufbahnöffnungswinkel γ bis 180° groß werden.

Weiterhin kann Stabilität der Konstruktion dadurch erreicht werden, wenn der Radius R_{L} der Laufbahn 34 auf der Rückseite größer als der Radius Rw der Welle 26 gewählt wird. Damit bleibt die Konstruktion auch stabil und wird sich selbst zentrieren, wenn im gesamten System aus Linearlager im Gehäuse auf einer Welle mit mindestens drei Laufbahnen 34 (siehe Fig. 5b) aufgrund Betriebsbelastungen gewisse elastische Verformungen entstehen.

Durch den durch die unterschiedlichen Krümmungen entstehenden Ein-Linien-Kontakt zwischen der äußeren Laufbahnoberfläche 42 und der Gehäusebohrungsoberfläche 28 kann eine Messung des Abstandes zwischen der Wellenoberfläche am Punkt 41 und der Gehäusebohrungsoberfläche am Punkt 43 für praktische Anwendungen stark vereinfacht werden. Der Dreipunkt-Kontakt der Laufbahn und die Selbstzentrierung die dadurch entsteht, machen die Messung der Laufbahndicke mit Hilfe einer Messkugel oder eines Prüfzylinders einfacher. Aufgrund von Fertigungstoleranzen der Laufbahnen 34 und/oder der Kugeln 13 kann es erforderlich sein, für eine Lagergröße (bzw. Gehäusebohrungsdurchmesser) unterschiedliche Kugeldurchmesser einzusetzen, um beispielsweise Fertigungstoleranzen bezüglich der radialen Erstreckung der Laufbahn 34 auszugleichen. Derartige Messungen können durch die vorliegende Erfindung gegenüber dem Stand der Technik, der anhand der Fig. 2b beschrieben wurde, deutlich vereinfacht werden. Herkömmlicherweise kann es passieren, dass eine Krümmung der äußeren Laufbahnoberfläche geringer ist als eine Krümmung der Gehäusebohrungsoberfläche, wodurch Messungen der Laufbahndicke erschwert werden. Die vorliegende Erfindung ermöglichet also ein einfacheres Messen der Laufbahndicke und damit eine prozesssicherere Automatisierung. Der Einfluss der Laufbahndickenschwankungen bei gleicher Kugelsortierung und ein Einfluss auf das gewünschte Betriebsspiel kann durch die geometrische Ausgestaltung der Laufbahn 34, insbesondere der äußeren Laufbahnkrümmung, minimiert werden. Des Weiteren ist das gleiche Laufbahnprofil für unterschiedliche Kugeldurchmesser und damit unterschiedliche Lagergrößen einsetzbar. Dies wird anhand der Fig. 3b veranschaulicht.

Die Fig. 3b zeigt den Einsatz einer erfindungsgemäßen Laufbahn 34 für unterschiedlich große Wellendurchmesser D1 und D2, welche bei gleicher Gehäusebohrung zu unterschiedlich großen Kugeldurchmessern d1 bzw. d2 führen. In anderen Worten ändert sich durch eine Änderung des Wellendurchmessers der Abstand zwischen Wellenoberfläche und Gehäusebohrung, d.h. der Abstand zwischen den Punkten 41 und 43. Dabei ändert sich jedoch die Position des Kontaktpunktes 43 nicht, so dass in beiden Fällen dieselbe Laufbahn 34, jedoch mit unterschiedlichen Kugeln, verwendet werden kann, solange die Kugel stets zwei Kontaktpunkte 38-1, 38-2 mit der Laufbahn hat und die äußere Krümmung der Laufbahn 34 immer noch ein Linienkontakt mit der Gehäusebohrung erzeugt. Bei einem Anwachsen des Kugeldurchmessers von einer Größe d2 hin zu einer Größe d1 wandern die beiden definierten Kontaktpunkte 38-1 und 38-2 entlang der ebenen schrägen Laufbahnoberflächenabschnitte 35-1 und 35-3 schräg nach unten, wie es durch die in Fig. 3b eingezeichneten Pfeile dargestellt ist. Dennoch ergeben sich sowohl für Kugeln 13 mit dem kleineren Durchmesser d2 als auch für Kugeln 13 mit dem größeren Durchmesser d1 jeweils definierte Kontaktstellen 38-1 und 38-2 an den Laufbahnoberflächenabschnitten 35-1 und 35-3. Ein und dieselbe Laufbahn 34 kann also für unterschiedliche Kugeldurchmesser und damit Lagergrößen eingesetzt werden, ohne dabei die beiden vorteilhaften definierten Kontaktpunkte 38-1 und 38-2 einzubüßen. In beiden Fällen wird die Kugel 13 durch den 3-Punkt-Kontakt, umfassen die zwei Kontaktpunkte 38-1 und 38-2 mit der Laufbahn 34 und einem Kontaktpunkt 41 mit der Welle 26, stabilisiert. Das System aus Gehäuse, Laufbahn, Kugel und Welle bleibt aber flexibel und kann Toleranzschwankungen der betroffenen Komponenten besser absorbieren als herkömmliche Anordnungen.

Obwohl manche Aspekte im Zusammenhang mit einer Vorrichtung bzw. einer Linearführung beschrieben wurden, versteht es sich, dass diese Aspekte auch eine Beschreibung eines entsprechenden Verfahrens, insbesondere eines Herstellungsverfahrens, darstellen, sodass ein Block oder ein Bauelement einer Vorrichtung auch als ein entsprechender Verfahrensschritt oder als ein Merkmal eines Verfahrensschritts, beispielsweise zur Herstellung einer Linearführung, zu verstehen ist. Analog dazu stellen Aspekte, die im Zusammenhang mit einem oder als ein Verfahrensschritt beschrieben wurden, auch eine Beschreibung eines entsprechenden Blocks oder Details bzw. Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist die Erfindung lediglich durch den Schutzumfang der nachstehenden Ansprüche und nicht durch die spezifischen Einzelheiten, die anhand der Beschreibung und der Erläuterung der Ausführungsbeispiele präsentiert wurden, beschränkt.

## Patentansprüche

1. Laufbahn (34) für eine Linearführung mit einem als Welle (26) ausgebildeten inneren Führungsteil und einem als zylindrische Buchse ausgebildeten Käfig (11) als äu-βeres Führungsteil, welches relativ zu der Welle (26) vermittels in dem Käfig (11) umlaufender Kugeln (13) beweglich ist, wobei der Käfig (11) von einer Lagergehäusebohrung aufgenommen werden kann, und wobei die Laufbahn (34) derart in den Käfig (11) eingesetzt werden kann, dass eine den umlaufenden Kugeln (13) zugewandte Laufbahnoberfläche (35), auf welcher die Kugeln (13) zwischen der Laufbahn (14) und einer Oberfläche (36) der Welle (26) abrollen können, radial ins Innere des Käfigs (11) weist,
wobei die Laufbahn (14) derart ausgebildet ist, dass
an der den umlaufenden Kugeln (13) zugewandten Laufbahnoberfläche (35) für eine zwischen der Laufbahnoberfläche (35) und der Oberfläche (36) einer Welle (26) abrollende Kugel (13) zwei vordefinierte und in Umfangsrichtung (37) der Kugel (13) voneinander beabstandete Kontaktbereiche (38-1; 38-2) bereitgestellt werden, an denen die Kugel (13) abrollen kann,
die Laufbahnoberfläche (35) in einer Ebene senkrecht zu einer axialen Erstreckung der Laufbahn (34) einen mehreckigen Querschnitt aufweist, so dass die Laufbahnoberfläche (35) drei parallel zu einer Längsachse der Laufbahn polygonal angeordnete, ebene Laufbahnoberflächenabschnitte (35-1; 35-2; 35-3) aufweist und die zwei Kontaktbereiche (38-1; 38-2) durch zwei der Laufbahnoberflächenabschnitte (35-1; 35-3) gebildet werden, und dass
eine der Lagergehäusebohrung zugewandte Oberfläche (42) der Laufbahn (34) eine größere Krümmung als eine Lagergehäusebohrung aufweist, so dass sich beim Einbringen eines Käfigs (11) mit der Laufbahn (34) in eine Lagergehäusebohrung ein linienförmiger Kontaktbereich (43) zwischen der Laufbahn (34) und Lagergehäusebohrung ausbilden kann.

2. Laufbahn (34) nach Anspruch 1, wobei die zwei vordefinierten Kontaktbereiche (38-1; 38-2) derart ausgebildet sind, dass die Kugel (13) im Betrieb der Linearführung beim Abrollen mit den zwei Kontaktbereichen (38-1; 38-2) jeweils eine gerade verlaufende Linie auf der ihr zugewandten Laufbahnoberfläche (35) beschreibt.

3. Laufbahn (34) nach einem der vorangehenden Ansprüche, wobei die zwei ebenen Laufbahnoberflächenabschnitte (35-1; 35-3) Tangentialflächenabschnitte für die auf der Laufbahn (34) umlaufende Kugel (13) bilden, die tangential zur Kugeloberfläche verlaufen.

4. Laufbahn (34) nach einem der vorhergehenden Ansprüche, wobei an der den umlaufenden Kugeln (13) zugewandten Laufbahnoberfläche (35) genau zwei vordefinierte und in Umfangsrichtung (37) der Kugel (13) voneinander beabstandete Kontaktbereiche (38-1; 38-2) bereitgestellt werden, an denen die Kugel (13) abrollen kann, wobei die beiden Kontaktbereiche (38-1; 38-2) symmetrisch zu einer radial verlaufenden Symmetrieachse (39) einer auf der Laufbahn abrollenden Kugel (13) angeordnet sind.

5. Linearführung mit einem als zylindrische Buchse ausgebildeten Käfig (11), in welchen wenigstens eine Laufbahn (34) nach einem der vorhergehenden Ansprüche eingesetzt ist, wobei der Käfig (11) mit der wenigstens einen Laufbahn (34) in der zylindrischen Lagergehäusebohrung gelagert ist.

6. Verfahren zum Herstellen einer Linearführung mit einem als Welle (26) ausgebildeten inneren Führungsteil und einem als zylindrische Buchse ausgebildeten Käfig (11) als äußeres Führungsteil, welches relativ zu der Welle (26) vermittels in dem Käfig (11) umlaufender Kugeln (13) beweglich ist, wobei der Käfig (11) von einer Lagergehäusebohrung aufgenommen werden kann, und wobei eine Laufbahn (34) derart in den Käfig (11) eingesetzt werden kann, dass eine den umlaufenden Kugeln (13) zugewandte Laufbahnoberfläche (35), auf welcher die Kugeln (13) zwischen der Laufbahn (14) und einer Oberfläche (36) der Welle (26) abrollen können, radial ins Innere des Käfigs (11) weist, mit folgenden Schritten:
Bereitstellen der Laufbahn (14), sodass an der den umlaufenden Kugeln (13) zugewandten Laufbahnoberfläche (35) für eine zwischen der Laufbahnoberfläche (35) und der Oberfläche (36) der Welle (26) abrollende Kugel (13) zwei vordefinierte und in Umfangsrichtung (37) der Kugel (13) voneinander beabstandete Kontaktbereiche (38-1; 38-2) bereitgestellt werden, an denen die Kugel (13) abrollen kann und die Laufbahnoberfläche (35) in einer Ebene senkrecht zu einer axialen Erstreckung der Laufbahn (34) einen mehreckigen Querschnitt aufweist, so dass die Laufbahnoberfläche (35) drei parallel zu einer Längsachse der Laufbahn polygonal angeordnete, ebene Laufbahnoberflächenabschnitte (35-1; 35-2; 35-3) aufweist und die zwei Kontaktbereiche (38-1; 38-2) durch zwei der Laufbahnoberflächenabschnitte (35-1; 35-3) gebildet werden, und sodass eine der Lagergehäusebohrung zugewandte Laufbahnoberfläche (42) eine größere Krümmung als die Lagergehäusebohrung aufweist, sodass sich beim Einbringen des Käfigs (11) mit der Laufbahn (34) in die Lagergehäusebohrung ein linienförmiger Kontakt (43) zwischen Laufbahn (34) und Lagergehäusebohrung ausbilden kann;
Einsetzen wenigstens einer Laufbahn (34) in den als zylindrische Buchse ausgebildeten Käfig (11);
Einbringen des Käfigs (11) mit der wenigstens einen eingesetzten Laufbahn (34) in die Lagergehäusebohrung, sodass sich zwischen der der Lagergehäusebohrung zugewandten Oberfläche (42) der Laufbahn (34) und der Lagergehäusebohrung der linienförmige Kontakt (43) zwischen Laufbahn (34) und Lagergehäusebohrung ergibt.

## Claims

1. Raceway (34) for a linear guide having an inner guiding part, designed as a shaft (26), and a cage (11), designed as a cylindrical bush, as an outer guiding part, which can be moved relative to the shaft (26) by means of balls (13) circulating in the cage (11), wherein the cage (11) can be accommodated by a bearing housing bore, and wherein the raceway (34) can be inserted into the cage (11) in such a way that a raceway surface (35) facing the circulating balls (13), on which the balls (13) can roll between the raceway (14) and a surface (36) of the shaft (26), faces radially into the interior of the cage (11),
wherein the raceway (14) is designed in such a way that
two predefined contact regions (38-1; 38-2) spaced apart from one another in the circumferential direction (37) of the ball (13) are provided on the raceway surface (35) facing the circulating balls (13) for a ball (13) rolling between the raceway surface (35) and the surface (36) of a shaft (26), on which contact regions the ball (13) can roll, the raceway surface (35) has a polygonal cross section in a plane perpendicular to an axial extent of the raceway (34), such that the raceway surface (35) has three polygonally arranged, planar raceway surface portions (35-1; 35-2; 35-3) parallel to a longitudinal axis of the raceway and the two contact regions (38-1; 38-2) are formed by two of the raceway surface portions (35-1; 35-3), and that a surface (42) of the raceway (34) which faces the bearing housing bore has a greater curvature than a bearing housing bore, such that, when a cage (11) with the raceway (34) is introduced into a bearing housing bore, a linear contact region (43) can be formed between the raceway (34) and the bearing housing bore.

2. Raceway (34) according to claim 1, wherein the two predefined contact regions (38-1; 38-2) are designed in such a way that, during operation of the linear guide, the ball (13), when rolling, describes with each of the two contact regions (38-1; 38-2) a rectilinearly extending line on the raceway surface (35) which faces it.

3. Raceway (34) according to either of the preceding claims, wherein the two planar raceway surface portions (35-1; 35-3) form tangential surface portions for the ball (13) circulating on the raceway (34), these portions extending tangentially to the ball surface.

4. Raceway (34) according to one of the preceding claims, wherein precisely two predefined contact regions (38-1; 38-2) spaced apart from one another in the circumferential direction (37) of the ball (13) are provided on the raceway surface (35) facing the circulating balls (13), on which contact regions the ball (13) can roll, wherein the two contact regions (38-1; 38-2) are arranged symmetrically to a radially extending axis of symmetry (39) of a ball (13) rolling on the raceway.

5. Linear guide having a cage (11) which is designed as a cylindrical bush and into which at least one raceway (34) according to one of the preceding claims is inserted, wherein the cage (11) with the at least one raceway (34) is mounted in the cylindrical bearing housing bore.

6. Method for producing a linear guide having an inner guiding part, designed as a shaft (26), and a cage (11), designed as a cylindrical bush, as an outer guiding part, which can be moved relative to the shaft (26) by means of balls (13) circulating in the cage (11), wherein the cage (11) can be accommodated by a bearing housing bore, and wherein a raceway (34) can be inserted into the cage (11) in such a way that a raceway surface (35) facing the circulating balls (13), on which the balls (13) can roll between the raceway (14) and a surface (36) of the shaft (26), faces radially into the interior of the cage (11), comprising the following steps:
providing the raceway (14), such that two predefined contact regions (38-1; 38-2) spaced apart from one another in the circumferential direction (37) of the ball (13) are provided on the raceway surface (35) facing the circulating balls (13) for a ball (13) rolling between the raceway surface (35) and the surface (36) of the shaft (26), on which contact regions the ball (13) can roll, and the raceway surface (35) has a polygonal cross section in a plane perpendicular to an axial extent of the raceway (34), such that the raceway surface (35) has three polygonally arranged, planar raceway surface portions (35-1; 35-2; 35-3) parallel to a longitudinal axis of the raceway and the two contact regions (38-1; 38-2) are formed by two of the raceway surface portions (35-1; 35-3), and such that a raceway surface (42) which faces the bearing housing bore has a greater curvature than the bearing housing bore, such that, when the cage (11) with the raceway (34) is introduced into the bearing housing bore, a linear contact (43) can be formed between the raceway (34) and the bearing housing bore;
inserting at least one raceway (34) into the cage (11) designed as a cylindrical bush;
introducing the cage (11) with the at least one inserted raceway (34) into the bearing housing bore, such that the linear contact (43) between the raceway (34) and the bearing housing bore results between the surface (42) of the raceway (34) which faces the bearing housing bore and the bearing housing bore.

## Revendications

1. Chemin de roulement (34) destiné à un guidage linéaire, comprenant une pièce de guidage intérieure réalisée sous la forme d'un arbre (26) et une cage (11) réalisée sous la forme d'un manchon cylindrique en tant que pièce de guidage extérieure, qui est mobile par rapport à l'arbre (26) au moyen de billes (13) circulant dans la cage (11), dans lequel la cage (11) peut être reçue par un alésage de logement de palier, et dans lequel le chemin de roulement (34) peut être inséré dans la cage (11) de telle sorte qu'une surface de chemin de roulement (35) tournée vers les billes (13) en circulation, sur laquelle les billes (13) peuvent rouler entre le chemin de roulement (14) et une surface (36) de l'arbre (26), soit orientée radialement vers l'intérieur de la cage (11),
dans lequel le chemin de roulement (14) est conçu de telle sorte
que deux zones de contact (38-1 ; 38-2) prédéfinies et espacées l'une de l'autre dans la direction circonférentielle (37) de la bille (13), sur lesquelles la bille (13) peut rouler, soient mises en place sur la surface de chemin de roulement (35) tournée vers les billes (13) en circulation, pour une bille (13) roulant entre la surface de chemin de roulement (35) et la surface (36) d'un arbre (26),
que la surface de chemin de roulement (35) présente une section transversale polygonale dans un plan perpendiculaire à une extension axiale du chemin de roulement (34), afin que la surface de chemin de roulement (35) présente trois parties de surface de chemin de roulement (35-1 ; 35-2 ; 35-3) planes disposées de manière polygonale parallèlement à un axe longitudinal du chemin de roulement, et que les deux zones de contact (38-1 ; 38-2) soient formées par deux des parties de surface de chemin de roulement (35-1 ; 35-3), et
qu'une surface (42) du chemin de roulement de roulement (34) tournée vers l'alésage de logement de palier présente une courbure plus grande qu'un alésage de logement de palier, afin que lors de l'introduction d'une cage (11) en association avec le chemin de roulement (34) dans un alésage de logement de palier, une zone de contact linéaire (43) puisse se former entre le chemin de roulement (34) et l'alésage de logement de palier.

2. Chemin de roulement (34) selon la revendication 1, dans lequel les deux zones de contact (38-1 ; 38-2) prédéfinies sont réalisées de telle sorte que la bille (13), lors du fonctionnement du guidage linéaire, décrive respectivement une ligne droite sur la surface de chemin de roulement (35) qui lui fait face lorsqu'elle roule sur les deux zones de contact (38-1 ; 38-2).

3. Chemin de roulement (34) selon l'une des revendications précédentes, dans lequel les deux parties de surface de chemin de roulement (35-1 ; 35-3) planes forment pour la bille (13) circulant sur le chemin de roulement (34) des parties de surface tangentielles qui s'étendent tangentiellement à la surface de la bille.

4. Chemin de roulement (34) selon l'une des revendications précédentes, dans lequel exactement deux zones de contact (38-1 ; 38-2) prédéfinies et espacées l'une de l'autre dans la direction circonférentielle (37) de la bille (13) sont mises en place sur la surface de chemin de roulement (35) tournée vers les billes (13) en circulation, sur lesquelles la bille (13) peut rouler, dans lequel les deux zones de contact (38-1 ; 38-2) sont disposées symétriquement par rapport à un axe de symétrie (39) s'étendant radialement d'une bille (13) roulant sur le chemin de roulement.

5. Guidage linéaire comprenant une cage (11) réalisée sous la forme d'un manchon cylindrique, dans laquelle est inséré au moins un chemin de roulement (34) selon l'une des revendications précédentes, dans lequel la cage (11) est logée en association avec ledit au moins un chemin de roulement (34) dans l'alésage de logement de palier cylindrique.

6. Procédé de fabrication d'un guidage linéaire comprenant une pièce de guidage intérieure réalisée sous la forme d'un arbre (26) et une cage (11) réalisée sous la forme d'un manchon cylindrique en tant que pièce de guidage extérieure, qui est mobile par rapport à l'arbre (26) au moyen de billes (13) circulant dans la cage (11), dans lequel la cage (11) peut être reçue par un alésage de logement de palier, et dans lequel un chemin de roulement (34) peut être inséré dans la cage (11) de telle sorte qu'une surface de chemin de roulement (35) tournée vers les billes (13) en circulation, sur laquelle les billes (13) peuvent rouler entre le chemin de roulement (14) et une surface (36) de l'arbre (26), soit orientée radialement vers l'intérieur de la cage (11), comprenant les étapes suivantes :
la mise en place du chemin de roulement (14) de telle sorte que deux zones de contact (38-1 ; 38-2) prédéfinies et espacées l'une de l'autre dans la direction circonférentielle (37) de la bille (13), sur lesquelles la bille (13) peut rouler, soient mises en place sur la surface de chemin de roulement (35) tournée vers les billes (13) en circulation, pour une bille (13) roulant entre la surface de chemin de roulement (35) et la surface (36) de l'arbre (26), et que la surface de chemin de roulement (35) présente une section transversale polygonale dans un plan perpendiculaire à une extension axiale du chemin de roulement (34), afin que la surface de chemin de roulement (35) présente trois parties de surface de chemin de roulement (35-1 ; 35-2 ; 35-3) planes disposées de manière polygonale parallèlement à un axe longitudinal du chemin de roulement, et que les deux zones de contact (38-1 ; 38-2) soient formées par deux des parties de surface de chemin de roulement (35-1 ; 35-3), et de telle sorte qu'une surface de chemin de roulement (42) tournée vers l'alésage de logement de palier présente une courbure plus grande que l'alésage de logement de palier, afin que lors de l'introduction de la cage (11) en association avec le chemin de roulement (34) dans l'alésage de logement de palier, un contact linéaire (43) puisse se former entre le chemin de roulement (34) et l'alésage de logement de palier ;
l'insertion d'au moins un chemin de roulement (34) dans la cage (11) réalisée sous la forme d'un manchon cylindrique ;
l'introduction de la cage (11) en association avec ledit au moins un chemin de roulement (34) inséré dans l'alésage de logement de palier, de telle sorte que le contact linéaire (43) entre le chemin de roulement (34) et l'alésage de logement de palier se produise entre la surface (42) du chemin de roulement (34) tournée vers l'alésage de logement de palier et l'alésage de logement de palier.
